(19) Europäisches Patentamt
European Patent Office
Office européen des brevets

(11) **EP 4 316 648 B1**

(12) **EUROPEAN PATENT SPECIFICATION**

(45) Date of publication and mention
of the grant of the patent:
**06.05.2026 Bulletin 2026/19**

(21) Application number: **22775117.9**

(22) Date of filing: **09.03.2022**

(51) International Patent Classification (IPC):
*B01J 20/28* (2006.01)     *B01J 20/30* (2006.01)
*B01D 53/72* (2006.01)     *B01D 53/82* (2006.01)
*D04H 1/407* (2012.01)     *D04H 1/43* (2012.01)
*D04H 1/542* (2012.01)     *D04H 1/58* (2012.01)
*D04H 1/732* (2012.01)     *D04H 1/4391* (2012.01)
*D21H 13/18* (2006.01)     *D21H 13/14* (2006.01)
*D21H 21/52* (2006.01)     *D21H 27/10* (2006.01)
*A23B 7/152* (2006.01)     *B01D 53/02* (2006.01)
*B65D 81/24* (2006.01)

(52) Cooperative Patent Classification (CPC):
**D21H 21/52; B01D 53/72; B01D 53/82;
B01J 20/28; B01J 20/28004; B01J 20/28011;
B01J 20/28023; B01J 20/28028; B01J 20/2803;
B01J 20/28038; B01J 20/30; D04H 1/407;
D04H 1/43; D04H 1/542; D04H 1/55;**     (Cont.)

(86) International application number:
**PCT/JP2022/010309**

(87) International publication number:
**WO 2022/202325 (29.09.2022 Gazette 2022/39)**

(54) **ADSORPTION SHEET AND PRODUCTION METHOD THEREFOR**

ADSORPTIONSFOLIE UND HERSTELLUNGSVERFAHREN DAFÜR

FEUILLE D'ADSORPTION ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.03.2021 JP 2021050988**

(43) Date of publication of application:
**07.02.2024 Bulletin 2024/06**

(73) Proprietor: **Tomoegawa Corporation
Tokyo 104-8335 (JP)**

(72) Inventors:
• **KITAHARA Hiroshi**
**Shizuoka-shi, Shizuoka 421-0192 (JP)**
• **MURAMATSU Daisuke**
**Shizuoka-shi, Shizuoka 421-0192 (JP)**
• **MIYAHARA Kaori**
**Shizuoka-shi, Shizuoka 421-0192 (JP)**
• **INOUE Tatsunari**
**Shizuoka-shi, Shizuoka 421-0192 (JP)**

(74) Representative: **V.O.
P.O. Box 87930
2508 DH Den Haag (NL)**

(56) References cited:
EP-A1- 1 525 802     JP-A- 2000 336 591
JP-A- 2009 154 031     JP-A- 2012 125 717
JP-A- 2021 006 337     JP-A- H02 118 194
JP-A- S6 378 739

(52) Cooperative Patent Classification (CPC): (Cont.)
**D04H 1/58; D04H 1/732; D21H 13/14; D21H 27/10;**
A23B 7/152; B01D 53/02; B01D 2253/102;
B01D 2253/104; B01D 2253/108; B01D 2253/11;
B01D 2253/25; B01D 2257/7022

**Description**

[Technical Field]

The present invention relates to an adsorption sheet and a method for producing the same.
Priority is claimed on Japanese Patent Application No. 2021-050988, filed March 25, 2021.

[Background Art]

In order to maintain the freshness of greengrocery such as vegetables and fruits, materials that adsorb ethylene gas are known. For example, Patent Document 1 describes a food packaging sheet in which a fine powder of a soft porous ancient marine humic substance that forms super porous pores having ethylene gas adsorption capacity is uniformly supported on the surface of a sheet-like carrier.
Patent Document 2 describes an ethylene adsorption material in the form of a paper sheet or film loaded with adsorbent.

[Citation List]

[Patent Document]

[Patent Document 1] Japanese Examined Patent Application, Second Publication No. Hei 8-25257
[Patent Document 2] European Patent Application 1 525 802 A1

[Summary of Invention]

[Technical Problem]

However, since the conventional ethylene gas adsorption sheet assumes a gas emitted from fruits and vegetables, the amount of gas adsorbed per unit time was small. For this reason, it is not suitable for use in, for example, adsorption of gas that is instantaneously generated in large amounts.
In order to increase the amount of gas adsorbed, a method of increasing the amount of adsorbent supported on the sheet is conceivable. However, when the amount of supported adsorbent increases, the adsorbent is not uniformly dispersed on the surface of the sheet, making it difficult to maintain an amount of adsorption corresponding to the amount of supported adsorbent.
In order to solve the above-mentioned problems, the present invention provides: an adsorption sheet that can increase the amount of adsorption by uniformly supporting an adsorbent on the sheet even when the amount of supported adsorbent is increased; and a method for producing the same.

[Solution to Problem]

A first aspect of the present invention is an adsorption sheet obtained by forming a single layer of an adsorptive composition, the adsorptive composition containing, out of a total solid content of 100% by mass, 20 to 80% by mass of an adsorbent, 12 to 75% by mass of a melt-resistant fiber with a high beating degree which is composed of a fiber that has a beating degree of 50 to 500 ml CSF and does not melt at a temperature of 150°C, and 2 to 12% by mass of a binder, wherein said adsorptive composition further comprises 2 to 66% by mass of a melt-resistant fiber with a low beating degree which is composed of a fiber that has a beating degree of 550 to 750 ml CSF and does not melt at a temperature of 150°C.
A second aspect is the adsorption sheet according to the first aspect, in which the aforementioned melt-resistant fiber with a high beating degree has an average fiber length of 0.5 to 2.5 mm, an average fiber width of 16 to 35 $\mu$m, and an aspect ratio of 30 to 80.
A third aspect is the adsorption sheet according to the first aspect, in which the aforementioned melt-resistant fiber with a low beating degree has an average fiber length of 2.6 to 10 mm, an average fiber width of 2 to 10 $\mu$m, and an aspect ratio of 300 to 1,250.
A fourth aspect is the adsorption sheet according to the first or third aspect, in which a beating degree of fibers obtained by combining the aforementioned melt-resistant fiber with a high beating degree and the aforementioned melt-resistant fiber with a low beating degree is from 50 to 500 ml CSF.
A fifth aspect is the adsorption sheet according to the first aspect, in which the aforementioned adsorptive composition either further contains, at a ratio of 25% by mass or less, a hot melt fiber composed of a fiber that melts at a temperature of 150°C, or does not contain the aforementioned hot melt fiber.

A sixth aspect is the adsorption sheet according to any one of the first to sixth aspects, in which the aforementioned adsorption sheet has a basis weight of 40 to 150 g/m$^2$.

An seventh aspect is a method for producing the adsorption sheet according to any one of the first to sixth aspects, which is a method for producing an adsorption sheet by subjecting a slurry containing the aforementioned adsorptive composition to paper making by a wet papermaking process.

[Advantageous Effects of Invention]

According to the present invention, the amount of adsorption can be increased by uniformly supporting an adsorbent on a sheet even when the amount of supported adsorbent is increased.

[Description of Embodiments]

The present invention will be described below based on preferred embodiments. It should be noted that the present invention is not limited only to the embodiments shown below.

An adsorption sheet of the present embodiment is a sheet obtained by forming a single layer of an adsorptive composition containing an adsorbent, a melt-resistant fiber and a binder. In the following description, the adsorption sheet may be simply referred to as a "sheet".

(Adsorbent)

Examples of the adsorbent include materials that can adsorb combustible gases such as ethylene.

Specific examples of the adsorbent include activated carbon, zeolite, silica, alumina, and white clay. The shape of the adsorbent is not particularly limited, but powder, particulate or fibrous adsorbents and the like can be mentioned.

The ratio of the adsorbent is from 20 to 80% by mass, preferably from 40 to 80% by mass, and more preferably from 60 to 75% by mass, out of 100% by mass of the total solid content of the adsorptive composition. When the ratio of the adsorbent with respect to the solid content is equal to or less than the above upper limit value, the adsorbent is less likely to fall off from the sheet. When the ratio of the adsorbent with respect to the solid content is equal to or more than the above lower limit value, it becomes easy to improve the adsorption performance.

(Melt-resistant fiber with high beating degree)

A melt-resistant fiber (fiber resistant to melting) is a fiber that does not melt at a temperature of 150°C. The melt-resistant fiber may be a natural fiber such as pulp, a synthetic fiber, or an inorganic fiber. The pulp is not particularly limited as long as it is a cellulose fiber composed mainly of natural plant materials as raw materials, and examples thereof include wood pulp, bast pulp, non-wood pulp, and waste paper pulp. Examples of the synthetic fiber include a polyester fiber, an acrylic fiber, and a polyamide fiber. The synthetic fiber may be synthetic pulp such as acrylic pulp. Examples of the inorganic fiber include a metal fiber, a mineral fiber, and a ceramic fiber. The cross-sectional shape of a melt-resistant fiber is not particularly limited, and may be any shape such as a circular shape, an elliptic shape, a substantially quadrangular shape, or an amorphous shape.

The adsorption sheet of the present embodiment contains a melt-resistant fiber with a high beating degree at a ratio of 12 to 75% by mass, out of 100% by mass of the total solid content of the adsorptive composition. A fiber with a high beating degree is a fiber that shows a value of Canadian Standard Freeness (CSF) measured in accordance with JIS P8121-2 (Pulps - Determination of drainability - Part 2: "Canadian Standard" freeness method) of 500 CSF or less.

Although depending on the type of the fiber, the CSF value tends to decrease as the beating of the fiber progresses. Examples of fibers from which the melt-resistant fibers with a high beating degree can be obtained include cellulose fibers such as wood pulp, acrylic pulp, and aramid pulp. By blending a melt-resistant fiber with a high beating degree in the adsorptive composition, it becomes easy to uniformly support a large amount of adsorbent on the sheet. It is preferable to support particles of the adsorbent on the surface of the fiber or at the points of entanglement. The term "beating" refers to mechanical processing of fibers. Fibers are subjected to actions by the beating to be cut short, torn into small pieces, or to be crushed and gelled.

The value of the beating degree (freeness) of the melt-resistant fiber with a high beating degree is from 50 to 500 ml CSF, preferably from 100 to 300 ml CSF, and more preferably from 180 to 220 ml CSF. When the value of freeness of the melt-resistant fiber is small (when the degree of beating is high), it is advantageous for uniform support of the adsorbent. If the freeness value of the melt-resistant fiber is appropriate, the freeness of the adsorptive composition can be ensured even in the papermaking process described below.

As the beating of the melt-resistant fibers progresses and the beating degree (freeness) of the melt-resistant fibers decreases, the adsorbent supporting capacity improves. If the ratio of the melt-resistant fibers with a high beating degree is low, it becomes difficult to uniformly support the adsorbent required for high adsorption performance on the sheet. That is, when the amount of the supported adsorbent is large, the adsorbent tends to detach from the sheet, and when the amount of the supported adsorbent is small, it becomes difficult to obtain high adsorption performance.

The ratio of the melt-resistant fiber with a high beating degree is from 12 to 75% by mass, preferably from 17 to 40% by mass, and more preferably from 20 to 25% by mass, out of 100% by mass of the total solid content. When the ratio of the melt-resistant fiber with a high beating degree is equal to or higher than the above lower limit value, it becomes easy to uniformly support the adsorbent required for high adsorption performance on the sheet. If the ratio of the melt-resistant fiber with a high beating degree is equal to or less than the above upper limit value, since the ratio of the adsorbent increases, high adsorption performance can be easily obtained.

The average fiber length of the melt-resistant fiber with a high beating degree is preferably from 0.5 to 2.5 mm, more preferably from 1.0 to 2.2 mm, and still more preferably from 1.6 to 1.9 mm. When the fiber length of the melt-resistant fiber with a high beating degree is equal to or more than the above lower limit value, the entanglement of the fiber increases. When the fiber length of the melt-resistant fiber with a high beating degree is equal to or less than the above upper limit value, the composition of the adsorptive composition is less likely to be uneven.

The average fiber width of the melt-resistant fiber with a high beating degree is preferably from 16 to 35 $\mu$m, more preferably from 18 to 35 $\mu$m, and still more preferably from 26 to 32 $\mu$m. When the fiber width of the melt-resistant fiber with a high beating degree is equal to or more than the above lower limit value, the gaps between the fibers are widened, the freeness during papermaking is improved, and the gas to be adsorbed is easily circulated. When the fiber width of the melt-resistant fiber with a high beating degree is equal to or less than the above upper limit value, the surface area of the fiber becomes large, and it becomes easy to increase the amount of the adsorbent supported.

The "average fiber length" of the fiber in the present specification refers to a weighted average value of values obtained by measuring fiber lengths using an aqueous dispersion of fibers by using a fiber length measuring device (Fiber Tester manufactured by Lorentzen & Wettre) based on JIS P8226-2 "Pulps - Determination of fibre length by automated optical analysis - Part 2: Unpolarized light method".

The "average fiber width" of the fiber in the present specification refers to a weighted average value of values obtained by measuring fiber widths using an aqueous dispersion of fibers by using a fiber length measuring device (Fiber Tester manufactured by Lorentzen & Wettre) based on JIS P8226-2 "Pulps - Determination of fibre length by automated optical analysis - Part 2: Unpolarized light method".

The aspect ratio of the melt-resistant fiber with a high beating degree is preferably from 30 to 80, more preferably from 40 to 70, and still more preferably from 55 to 65. The aspect ratio of a fiber can be calculated as a ratio represented by a formula: (fiber length)/ (fiber width).

(Binder)

The adsorptive composition of the embodiment contains a binder in addition to the adsorbent and the melt-resistant fiber.

Examples of the binder include acrylic emulsions, polyester emulsions, polymer particles such as latex, and hygroscopic fibers such as polyvinyl alcohol (PVA) fibers. When the adsorbent is supported on the sheet of the adsorptive composition containing the melt-resistant fiber, the adsorbent is less likely to detach from the sheet due to the binder contained in the adsorptive composition.

A ratio of the binder is from 2 to 12% by mass, preferably from 3 to 9% by mass, and more preferably from 7 to 8% by mass, out of 100% by mass of the total solid content of the adsorptive composition. If the binder in the adsorptive composition is equal to or less than the above upper limit value, the adhesiveness of the sheet will be reduced, and the sheet will be easier to handle, for example, in the papermaking process and the like described later. When the binder in the adsorptive composition is equal to or more than the above lower limit value, the strength of the sheet is improved and the handling of the sheet is facilitated.

(Melt-resistant fiber with low beating degree)

The adsorptive composition of the embodiment further contains a melt-resistant fiber with a low beating degree. A fiber with a low beating degree refers to a fiber having a Canadian Standard Freeness (CSF) value, as described above, of 550 to 750 ml CSF.

The melt-resistant fiber with a low beating degree is a fiber that has a beating degree of 550 to 750 ml CSF and does not melt at a temperature of 150°C.

By blending the melt-resistant fiber with a low beating degree into the adsorptive composition, the gaps between the fibers widen, making it easier for the gas to be adsorbed to circulate. In addition, in a sheet supporting a large amount of adsorbent, the melt-resistant fibers with a low beating degree reduce the adhesiveness of the sheet, so that the sheet can be easily handled in, for example, the papermaking process and the like described later. The beating degree (freeness) value of the melt-resistant fibers with a low beating degree is from 550 to 750 ml CSF preferably from 600 to 700 ml CSF.

The ratio of the melt-resistant fiber with a low beating degree is preferably from 2 to 66% by mass, more preferably from 2 to 25% by mass, and still more preferably from 3 to 10% by mass, out of 100% by mass of the total solid content. Even if the amount of the supported adsorbent is increased, the adsorbent can be uniformly supported on the sheet, making it easy to increase the amount of adsorption.

From the viewpoint of the melt-resistant fiber with a low beating degree described above, it is preferable that the melt-resistant fiber with a low beating degree has a longer fiber length and a larger aspect ratio than those of the melt-resistant fiber with a high beating degree. Fibers with large aspect ratios greatly increase entanglement and improve wet peel strength, resulting in improved releasability from the papermaking wire. The average fiber length of the melt-resistant fiber with a low beating degree is preferably from 2.6 to 10 mm, more preferably from 2.8 to 6 mm, and still more preferably from 3 to 4 mm. The aspect ratio of the melt-resistant fiber with a low beating degree is preferably from 300 to 1,250, more preferably from 500 to 1,000, and still more preferably from 700 to 800.

From the viewpoint of making the effect obtained by blending a melt-resistant fiber with a low beating degree with an adsorptive composition compatible with the uniform support of a large amount of adsorbent by a melt-resistant fiber with a high beating degree, it is preferred that the melt-resistant fiber with a low beating degree has a smaller fiber width than that of the melt-resistant fiber with a high beating degree. For example, the average fiber width of the melt-resistant fiber with a low beating degree is preferably from 2 to 10 $\mu$m, more preferably from 2 to 7.5 $\mu$m, and still more preferably from 3 to 6 $\mu$m.

The adsorption sheet of the embodiment has improved tensile strength due to the incorporation of the melt-resistant fiber, high peel strength of the sheet even in a wet state, and favorable handleability of the sheet. The blending ratio of the melt-resistant fiber can be appropriately set in consideration of the above ratios of the adsorbent and the binder. The melt-resistant fiber with a high beating degree may be blended more than the melt-resistant fiber with a low beating degree, and the melt-resistant fiber with a low beating degree may be blended more than the melt-resistant fiber with a high beating degree. It is preferable that the blending amount of melt-resistant fibers, that is, a combination of the melt-resistant fiber with a high beating degree and the melt-resistant fiber with a low beating degree, be within a predetermined range, taking into consideration the ratios of the adsorbent and the binder.

As described above, from the viewpoint of uniformly supporting the adsorbent required for high adsorption performance on the sheet, it is preferable that, on average, the beating degree of the melt-resistant fibers, that is, a combination of the melt-resistant fiber with a high beating degree and the melt-resistant fiber with a low beating degree is high. For example, the beating degree of the melt-resistant fiber obtained by combining the melt-resistant fiber with a high beating degree and the melt-resistant fiber with a low beating degree is preferably from 50 to 500 ml CSF, more preferably from 160 to 450 ml CSF, and still more preferably from 270 to 400 ml CSF.

It is also possible to separate the melt-resistant fiber with a high beating degree and the melt-resistant fiber with a low beating degree from a combination of the melt-resistant fiber with a high beating degree and the melt-resistant fiber with a low beating degree. For example, a slurry of melt-resistant fibers may be poured onto a screen of the filtration equipment and the slurry may be vibrated to separate the fibers that pass through the screen from those that remain on the screen. Although the method for vibrating the slurry is not particularly limited, for example, a vibrating plate or the like that vibrates vertically in the slurry below the screen may be used. The screen may have a slit width depending on the fiber width or a slit spacing depending on the fiber length.

If the fiber width is narrower than the slit width, the fiber can pass through the slit. For example, if the fiber width of a fiber A is larger than the fiber width of a fiber B and the slit width is an intermediate value between the fiber width of the fiber A and the fiber width of the fiber B, the fibers A and B can be separated because the fiber A remains on the screen and the fiber B passes through the screen. At this time, the slit length is preferably at least longer than the fiber length of the fiber B.

Further, if the fiber length is longer than the slit spacing, the fiber straddles between the slits and remains on the screen. For example, if the fiber length of the fiber A is shorter than the fiber length of the fiber B and the slit spacing is an intermediate value between the fiber length of the fiber A and the fiber length of the fiber B, the fibers A and B can be separated because the fiber A passes through the screen and the fiber B remains on the screen. At this time, the slit width is preferably at least greater than the fiber width of the fiber A.

(Hot melt fiber)

The adsorptive composition of the embodiment may further contain a hot melt fiber. In the adsorption sheet of the embodiment, the hot melt fiber is an optional component, and the adsorptive composition may not contain the hot melt fiber. The hot melt fiber is a fiber that melts at a temperature of 150°C. That is, the hot melt fiber has a melting temperature of 150°C or less. By melting the hot melt fiber, the water resistance and the tensile strength in a dry state of the sheet can be improved.

Examples of the hot melt fiber include polyester fibers such as polyethylene terephthalate (PET) fibers, polyethylene fibers, polyamide fibers, ethylene vinyl alcohol fibers, and the like, which have a low melting point. It may be a wholly melting type in which the entire fiber is formed from a low melting point resin, or a composite type such as a core-sheath structure. The low-melting-point resin may be a non-stretched resin, an amorphous resin, a modified resin, or the like.

If the ratio of the hot melt fiber with respect to the solid content of the adsorptive composition is too high, the resin melted from the hot melt fiber may cover the adsorbent and deteriorate the adsorption performance. When the adsorptive composition contains a hot melt fiber, the ratio of the hot melt fiber is preferably 25% by mass or less, more preferably from 9 to 20% by mass, and still more preferably from 10 to 15% by mass, out of 100% by mass of the total solid content. When the blended amount of the hot melt fiber is 25% by mass or less, the heat resistance of the adsorptive composition can be ensured in the manufacturing process or under the conditions of use of the sheet.

(Adsorption sheet)

The adsorption sheet of the embodiment is a sheet obtained by forming a single layer of an adsorptive composition containing, as a solid content, an adsorbent, a melt-resistant fiber, and a binder. The basis weight of the adsorption sheet is preferably from 40 to 150 g/m$^2$, more preferably from 45 to 100 g/m$^2$, and still more preferably from 50 to 70 g/m$^2$. When the basis weight of the adsorption sheet is equal to or higher than the above lower limit value, the amount of adsorbent blended per unit area increases, resulting in high adsorption performance. It is preferable from the lightness of the sheet that the basis weight of the adsorption sheet is equal to or less than the above upper limit value.

The adsorption sheet of the embodiment can be easily produced by making a slurry containing the adsorptive composition by a wet papermaking method. As a result, even if the amount of the supported adsorbent is increased, the adsorbent can be uniformly supported on the sheet, making it easy to increase the amount of adsorption. The term "papermaking" refers to production of a sheet such as paper by subjecting a raw material to a papermaking process.

In the wet papermaking method, a sheet is formed by dispersing an adsorptive composition containing an adsorbent, a melt-resistant fiber, and a binder in a slurry, and subjecting the solid content to an upward papermaking process. A filler, a dispersant, a thickener, an antifoaming agent, a paper strengthening agent, a sizing agent, a flocculant, a coloring agent, a fixing agent, or the like can be appropriately added to the slurry.

As a paper machine, a cylinder paper machine, a Fourdrinier paper machine, a short net paper machine, an inclined paper machine, a combination paper machine obtained by combining the same or different types of paper machines from these, or the like can be used. A sheet can be obtained by dehydrating and drying the wet paper after the papermaking process using an air dryer, a cylinder dryer, a suction drum dryer, an infrared dryer, or the like.

The adsorption sheet of the embodiment is excellent in handleability as the adsorbent does not easily detach even in a single-layer sheet. Even if a large amount of combustible gas such as ethylene gas is instantaneously generated, the gas can be adsorbed. In addition, since the sheet is formed from an adsorptive composition mainly composed of an adsorbent and a melt-resistant fiber, it is also suitable for use in adsorbing gases at high temperatures. It is not limited to conventional packaging applications for food products such as fruits and vegetables, and can be applied to various packaging materials, industrial materials, and the like.

[Examples]

The present invention will be specifically described below with reference to Examples. It should be noted that the present invention is not limited only to the following Examples.

(Production of adsorption sheet)

An adsorption sheet was produced by preparing a slurry using an adsorptive composition having a composition shown in Tables 1 to 4 and producing a single-layer sheet by a wet papermaking method.

In Tables 1 to 4, as the composition of the adsorptive composition, in addition to parts by mass of an adsorbent, a melt-resistant fiber with a high beating degree, a melt-resistant fiber with a low beating degree, a binder, and a hot melt fiber, parts by mass of "total of adsorbent and melt-resistant fibers" and parts by mass of "total solid content" are described.

As the adsorbent, for example, activated carbon particles were used. As the melt-resistant fiber with a high beating degree, for example, an acrylic pulp (beating degree: 200 ml CSF; average fiber length: 0.75 mm; average fiber width: 20.9 μm; aspect ratio: 36) was used.

As the melt-resistant fiber with a low beating degree, for example, an acrylic fiber (beating degree: 640 ml CSF; average fiber length: 3 mm; average fiber width: 4 μm; aspect ratio: 750) was used.

As the binder, for example, an acrylic emulsion was used.

As the hot melt fiber, for example, a low-melting point polyethylene terephthalate (PET) fiber was used.

The basis weight (g/m$^2$) of the adsorption sheet was calculated by measuring the area and weight of a sample cut out from the adsorption sheet.

The amount of gas adsorbent (g/m$^2$) was calculated by multiplying the basis weight (g/m$^2$) of the adsorption sheet with a ratio represented by a formula: (parts by mass of adsorbent)/ (parts by mass of total solid content).

(Measurement of amount of ethylene gas adsorption)

1) A sample of an adsorption filter was produced by punching out a sheet having a circular shape with a diameter of 45 mm from the adsorption sheet.

2) The obtained sample was dried under vacuum at 150°C for 24 hours in a vacuum thermostatic chamber and was then placed in an aluminum vapor deposition bag filled with nitrogen gas, and the bag was sealed and stored.

3) A 10 L bag filled with air containing ethylene at a concentration of 100 ppm (mixed gas obtained by diluting ethylene with air) was prepared.

4) Silicone tubes were connected to the inlet side and outlet side of a filter holder, respectively, the sample was inserted into the filter holder, and nitrogen gas was allowed to flow through the silicone tubes for 1 minute to replace the gas contained in the adsorption filter with nitrogen.

5) The bag described above was connected to the end of the silicone tube on the inlet side of the filter holder, and a gas collector was connected to the end of the silicone tube on the outlet side of the filter holder via a detector tube.

6) Using the gas collector, the mixed gas in the bag was sucked at a suction rate of 100 ml/min. At this time, the mixed gas in the bag was supplied to the filter holder through the silicone tube on the inlet side. Furthermore, the gas that had passed through the filter holder was supplied to the detector tube through the silicone tube on the outlet side. In the detector tube, the concentration of ethylene gas contained in the gas that had passed through the filter holder was measured.

7) The amount of ethylene gas adsorption was determined by the following formula.

Amount of ethylene gas adsorption = (measured value of ethylene gas concentration before setting the sample (BLANK value)) - (measured value of ethylene gas concentration after setting the sample)

(Evaluation of gas adsorption properties)

The gas adsorption properties were evaluated based on the measured value of the amount of ethylene gas adsorption.

The evaluation criteria for gas adsorption properties were as follows.

A: The amount of ethylene gas adsorption was 20 ppm or more.
B: The amount of ethylene gas adsorption was 10 ppm or more and less than 20 ppm.
C: The amount of ethylene gas adsorption was less than 10 ppm, but not 0 ppm.
D: The amount of ethylene gas adsorption was 0 ppm.

(Evaluation of freeness)

When a total of 10 L of dilution water and slurry was charged into a sample tank of a square sheet machine, the time required for dehydration was measured and evaluated based on the dehydration time (seconds).

The evaluation criteria for freeness were as follows.

A: The dehydration time was less than 10 seconds.
B: The dehydration time was 10 seconds or more and less than 20 seconds.
C: The dehydration time was 20 seconds or more and less than 30 seconds.
D: The dehydration time was 30 seconds or more.

(Evaluation of dryer adhesion)

When a sheet produced from a slurry of the adsorptive composition by a wet papermaking method was dried with a dryer, the wet sheet in a wet paper state was evaluated based on the presence or absence of portions adhered to the surface of the dryer.

The evaluation criteria for dryer adhesion were as follows.

B: There was no portion where the sheet adhered to the dryer surface.
D: There was a portion where the sheet adhered to the dryer surface.

(Evaluation of particle detachment)

1) A sheet of transfer paper (basis weight: 280 g/m$^2$; thickness: 500 $\mu$m; density: 0.56 g/cm$^3$; product number: AT280 manufactured by Tomoegawa Co., Ltd.) and an adsorption sheet were each cut into 5 cm squares.
2) Three layers were superimposed so as to achieve an order of (transfer paper) / (adsorption sheet) / (transfer paper) to form an object to be pressed, and the object was pressed using a press machine (tablet molding compressor, product number: BRE-32, capacity: 300 kN, manufactured by Mayekawa Mfg. Co., Ltd.) under the conditions of a press pressure of 10 MPa and a press time of 5 seconds.
3) The object to be pressed was recovered from the press machine, and a transfer surface, which was the surface of the transfer paper brought into contact with a test piece, was exposed to obtain a test piece for the degree of whiteness.
4) Using a whiteness tester (SPECTRO COLOR METER MODEL PF-10, manufactured by Nippon Denshoku Industries Co., Ltd.) in accordance with JIS P8148, the degree of whiteness of the transfer surface of the transfer paper was measured.
5) Using the degree of whiteness of a sheet of base paper before pressing the transfer paper as the "blank whiteness", the detachability of particles was calculated by the following formula.

Detachability (%) = ((blank whiteness) - (test piece whiteness)) / (blank whiteness) $\times$ 100 (%)

6) The evaluation criteria for particle detachment were as follows.

A: The detachability was 0% or more and 10% or less.
B: The detachability was more than 10% and 20% or less.
C: The detachability was more than 20% and 30% or less.
D: The detachability was more than 30%.

(Evaluation of wet peel strength)

1) Using a round sheet machine, a sheet was produced from a slurry of the adsorptive composition by a wet papermaking method.
2) A wet sheet in a wet paper state was cut on a wire to a width of 25 mm using a pizza cutter having a disc-shaped blade rotatably attached to the end of a handle.
3) The edge of the wet sheet cut to a width of 25 mm was sandwiched between chucks of a tensile tester and pulled up at a rate of 100 mm/min.
4) The evaluation criteria for wet peel strength were as follows.

B: The wet sheet could be pulled up without being cut.
D: The wet sheet was cut during pulling up.

(Evaluation of tensile strength in dry state)

In accordance with JIS P8113 (Paper and board - Determination of tensile properties), a tensile load was applied to the adsorption sheet in a dry state (standard humidity conditions), and the tensile strength (N) was measured based on the maximum tensile load until the sheet ruptured.
The evaluation criteria for tensile strength in dry state were as follows.

A: The tensile strength was 15 N or more.
B: The tensile strength was 8N or more and less than 15N.
C: The tensile strength was 4N or more and less than 8N.
D: The tensile strength was less than 4N.

(Overall evaluation)

An overall evaluation was obtained based on the evaluation results of six properties; i.e., gas adsorption properties, freeness, dryer adhesion, particle detachment, wet peel strength, and tensile strength in dry state.

The evaluation criteria for the overall evaluation were as follows.

B: There was no properties rated as D among the six properties.
D: At least one of the six properties was rated as D.

Tables 1 to 4 show the measurement and evaluation results.

[Table 1]

| | Comp. Ex. 1 | Ex. 1 | Ex. 2 | Ex. 3 | Ex. 4 | Ex. 5 | Ex. 6 | Comp. Ex. 2 |
|---|---|---|---|---|---|---|---|---|
| Adsorbent | 13 | 22 | 45 | 68 | 70 | 73 | 77 | 82 |
| Melt-resistant fiber with high beating degree | 77 | 68 | 45 | 22 | 20 | 17 | 15 | 10 |
| Melt-resistant fiber with low beating degree | 3 | 3 | 3 | 3 | 3 | 3 | 3 | 3 |
| Binder | 7 | 7 | 7 | 7 | 7 | 7 | 5 | 5 |
| Hot melt fiber | | | | | | | | |
| Total of adsorbent and melt-resistant fibers | 93 | 93 | 93 | 93 | 93 | 93 | 95 | 95 |
| Total solid content | 100 | 100 | 100 | 100 | 100 | 100 | 100 | 100 |
| Basis weight ($g/m^2$) | 55 | 55 | 55 | 55 | 55 | 55 | 55 | 55 |
| Amount of gas adsorbent ($g/m^2$) | 7 | 12 | 25 | 37 | 39 | 40 | 42 | 45 |
| Amount of ethylene gas adsorption (ppm) | 0 | 10↓ | 20 | 30 | 30 | 30 | 30 | 35 |
| Gas adsorption properties | D | C | A | A | A | A | A | A |
| Freeness | C | B | A | A | A | A | A | A |
| Dryer adhesion | B | B | B | B | B | B | B | B |
| Particle detachment | A | A | A | B | B | B | C | D |
| Wet peel strength | B | B | B | B | B | B | B | D |
| Tensile strength in dry state | A | B | B | C | C | C | C | D |
| Overall evaluation | D | B | B | B | B | B | B | D |

[Table 2]

| | Ex. 7 | Ex. 8 | Ex. 9 | Ex. 10 | Ex. 11 | Ex. 12 | Comp. Ex. 3 |
|---|---|---|---|---|---|---|---|
| Adsorbent | 76 | 74 | 70 | 67 | 54 | 22 | 18 |
| Melt-resistant fiber with high beating degree | 15 | 15 | 15 | 15 | 12 | 14 | 12 |
| Melt-resistant fiber with low beating degree | 1 | 3 | 7 | 13 | 26 | 62 | 68 |
| Binder | 8 | 8 | 8 | 8 | 8 | 2 | 2 |
| Hot melt fiber | | | | | | | |
| Total of adsorbent and melt-resistant fibers | 92 | 92 | 92 | 95 | 92 | 98 | 98 |
| Total solid content | 100 | 100 | 100 | 103 | 100 | 100 | 100 |

(continued)

| | Ex. 7 | Ex. 8 | Ex. 9 | Ex. 10 | Ex. 11 | Ex. 12 | Comp. Ex. 3 |
|---|---|---|---|---|---|---|---|
| Basis weight (g/m$^2$) | 55 | 55 | 55 | 55 | 55 | 55 | 55 |
| Amount of gas adsorbent (g/m$^2$) | 42 | 41 | 39 | 37 | 30 | 12 | 10 |
| Amount of ethylene gas adsorption (ppm) | 30 | 30 | 30 | 30 | 20 | 10↓ | 0 |
| Gas adsorption properties | A | A | A | A | A | C | D |
| Freeness | C | A | A | A | A | A | A |
| Dryer adhesion | B | B | B | B | B | B | B |
| Particle detachment | C | B | B | B | A | A | A |
| Wet peel strength | C | B | B | B | B | B | B |
| Tensile strength in dry state | C | C | C | C | B | C | C |
| Overall evaluation | B | B | B | B | B | B | D |

[Table 3]

| | Comp. Ex. 4 | Ex. 13 | Ex. 14 | Ex. 15 | Comp. Ex. 5 |
|---|---|---|---|---|---|
| Adsorbent | 70 | 70 | 70 | 70 | 70 |
| Melt-resistant fiber with high beating degree | 30 | 28 | 25 | 20 | 17 |
| Melt-resistant fiber with low beating degree | | | | | |
| Binder | 0 | 2 | 5 | 10 | 13 |
| Hot melt fiber | | | | | |
| Total of adsorbent and melt-resistant fibers | 100 | 98 | 95 | 90 | 87 |
| Total solid content | 100 | 100 | 100 | 100 | 100 |
| Basis weight (g/m$^2$) | 55 | 55 | 55 | 55 | 55 |
| Amount of gas adsorbent (g/m$^2$) | 39 | 39 | 39 | 39 | 39 |
| Amount of ethylene gas adsorption (ppm) | 30 | 30 | 30 | 30 | 30 |
| Gas adsorption properties | A | A | A | A | A |
| Freeness | C | A | A | A | A |
| Dryer adhesion | B | B | B | B | D |
| Particle detachment | D | C | B | B | C |
| Wet peel strength | B | B | B | B | B |
| Tensile strength in dry state | D | C | C | C | C |
| Overall evaluation | D | B | B | B | D |

[Table 4]

| | Ex. 16 | Ex. 17 | Ex. 18 | Ex. 19 | Ex. 20 | Ex. 21 |
|---|---|---|---|---|---|---|
| Adsorbent | 45 | 45 | 45 | 45 | 45 | 45 |
| Melt-resistant fiber with high beating degree | 45 | 38 | 34 | 30 | 24 | 20 |
| Melt-resistant fiber with low beating degree | | | | | | |
| Binder | 8 | 8 | 8 | 8 | 8 | 8 |
| Hot melt fiber | 2 | 9 | 13 | 17 | 23 | 27 |
| Total of adsorbent and melt-resistant fibers | 90 | 83 | 79 | 75 | 69 | 65 |
| Total solid content | 100 | 100 | 100 | 100 | 100 | 100 |

(continued)

| | Ex. 16 | Ex. 17 | Ex. 18 | Ex. 19 | Ex. 20 | Ex. 21 |
|---|---|---|---|---|---|---|
| Basis weight (g/m$^2$) | 55 | 55 | 55 | 55 | 55 | 55 |
| Amount of gas adsorbent (g/m$^2$) | 25 | 25 | 25 | 25 | 25 | 25 |
| Amount of ethylene gas adsorption (ppm) | 20 | 10 | 10↓ | 10↓ | 10↓ | 10↓ |
| Gas adsorption properties | A | B | C | C | C | C |
| Freeness | A | A | A | A | A | A |
| Dryer adhesion | B | B | B | B | B | B |
| Particle detachment | A | A | A | A | A | A |
| Wet peel strength | B | B | B | B | B | B |
| Tensile strength in dry state | B | B | A | A | A | A |
| Overall evaluation | B | B | B | B | B | B |

The adsorption sheets of Examples 1 to 21 were not rated as D for any of the six properties; i.e., gas adsorption properties, freeness, dryer adhesion, particle detachment, wet peel strength and tensile strength in dry state, and were overall evaluated as B.

The adsorption sheet of Comparative Example 1 contained a small amount of the blended adsorbent and a large amount of the blended melt-resistant fiber with a high beating degree, was evaluated as D for the gas adsorption properties, and was overall evaluated as D.

The adsorption sheet of Comparative Example 2 contained a large amount of the blended adsorbent and a small amount of the blended melt-resistant fiber with a high beating degree, was evaluated as D for the wet peel strength and the tensile strength in a dry state, and was overall evaluated as D.

The adsorption sheet of Comparative Example 3 contained a small amount of the blended adsorbent, was evaluated as D for the gas adsorption properties, and was overall evaluated as D.

The adsorption sheet of Comparative Example 4 did not contain a binder, was evaluated as D for the tensile strength in a dry state and the particle detachment, and was overall evaluated as D.

The adsorption sheet of Comparative Example 5 contained a large amount of the blended binder, was evaluated as D for the dryer adhesion, and was overall evaluated as D.

[Industrial Applicability]

It is possible to provide: an adsorption sheet that can increase the amount of adsorption by uniformly supporting an adsorbent on the sheet even if the amount of supported adsorbent is increased; and a method for producing the same.

**Claims**

1.  An adsorption sheet obtained by forming a single layer of an adsorptive composition, the adsorptive composition comprising, out of a total solid content of 100% by mass,

    20 to 80% by mass of an adsorbent,
    12 to 75% by mass of a melt-resistant fiber with a high beating degree which is composed of a fiber that has a beating degree of 50 to 500 ml CSF and does not melt at a temperature of 150°C, and
    2 to 12% by mass of a binder,
    wherein said adsorptive composition further comprises 2 to 66% by mass of a melt-resistant fiber with a low beating degree which is composed of a fiber that has a beating degree of 550 to 750 ml CSF and does not melt at a temperature of 150°C.

2.  The adsorption sheet according to Claim 1,
    wherein said melt-resistant fiber with a high beating degree has an average fiber length of 0.5 to 2.5 mm, an average fiber width of 16 to 35 $\mu$m, and an aspect ratio of 30 to 80.

3.  The adsorption sheet according to Claim 1,

wherein said melt-resistant fiber with a low beating degree has an average fiber length of 2.6 to 10 mm, an average fiber width of 2 to 10 μm, and an aspect ratio of 300 to 1,250.

4. The adsorption sheet according to Claim 1 or 3,
   wherein a beating degree of fibers obtained by combining said melt-resistant fiber with a high beating degree and said melt-resistant fiber with a low beating degree is from 50 to 500 ml CSF.

5. The adsorption sheet according to Claim 1,
   wherein said adsorptive composition either further contains, at a ratio of 25% by mass or less, a hot melt fiber composed of a fiber that melts at a temperature of 150°C, or does not contain said hot melt fiber.

6. The adsorption sheet according to any one of Claims 1 to 5, wherein said adsorption sheet has a basis weight of 40 to 150 g/m$^2$.

7. A method for producing the adsorption sheet according to any one of Claims 1 to 6,
   which is a method for producing an adsorption sheet by subjecting a slurry comprising said adsorptive composition to paper making by a wet papermaking process.


**Patentansprüche**

1. Adsorptionsfolie, die durch Bilden einer einzigen Schicht einer Adsorptionszusammensetzung erhalten wird, wobei die Adsorptionszusammensetzung, bezogen auf einen Gesamtfeststoffgehalt von 100 Massenprozent,

   20 bis 80 Massenprozent eines Adsorptionsmittels,
   12 bis 75 Massenprozent einer schmelzbeständigen Faser mit hohem Schlaggrad, die aus einer Faser mit einem Schlaggrad von 50 bis 500 ml CSF besteht und bei einer Temperatur von 150 °C nicht schmilzt, und
   2 bis 12 Massenprozent eines Bindemittels, umfasst
   wobei die Adsorptionszusammensetzung ferner 2 bis 66 Massenprozent einer schmelzbeständigen Faser mit einem niedrigenSchlaggrad umfasst, die aus einer Faser besteht, die einen Schlaggrad von 550 bis 750 ml CSF aufweist und bei einer Temperatur von 150 °C nicht schmilzt.

2. Adsorptionsfolie nach Anspruch 1,
   wobei die schmelzbeständige Faser mit hohem Schlaggrad eine durchschnittliche Faserlänge von 0,5 bis 2,5 mm, eine durchschnittliche Faserbreite von 16 bis 35 μm und ein Seitenverhältnis von 30 zu 80 aufweist.

3. Adsorptionsfolie nach Anspruch 1,
   wobei die schmelzbeständige Faser mit niedrigem Schlaggrad eine durchschnittliche Faserlänge von 2,6 bis 10 mm, eine durchschnittliche Faserbreite von 2 bis 10 μm und ein Seitenverhältnis von 300 zu1.250 aufweist.

4. Adsorptionsfolie nach Anspruch 1 oder 3,
   wobei der Schlaggrad der Fasern, die durch Kombinieren der schmelzbeständigen Faser mit hohem Schlaggrad und der schmelzbeständigen Faser mit niedrigem Schlaggrad erhalten werden, zwischen 50 und 500 ml CSF liegt.

5. Adsorptionsfolie nach Anspruch 1,
   wobei die Adsorptionszusammensetzung entweder zusätzlich in einem Anteil von 25 Massenprozent oder weniger eine Heißschmelzfaser enthält, die aus einer Faser besteht, die bei einer Temperatur von 150 °C schmilzt, oder diese Heißschmelzfaser nicht enthält.

6. Adsorptionsfolie nach einem der Ansprüche 1 bis 5, wobei die Adsorptionsfolie ein Flächengewicht von 40 bis 150 g/m$^2$ aufweist.

7. Verfahren zum Herstellen der Adsorptionsfolie nach einem der Ansprüche 1 bis 6,
   wobei es sich um ein Verfahren zum Herstellen einer Adsorptionsfolie handelt, indem eine die Adsorptionszusammensetzung umfassende Aufschlämmung der Papierherstellung nach einem Nasspapierherstellungsverfahren unterzogen wird.

**Revendications**

1. Feuille d'adsorption obtenue par formation d'une monocouche d'une composition adsorbante, la composition adsorbante comprenant, pour une teneur en solides totale de 100 % en masse,

   20 à 80 % en masse d'un adsorbant,
   12 à 75 % en masse d'une fibre résistante à la fusion ayant un degré de raffinage élevé qui est composée d'une fibre ayant un degré de raffinage de 50 à 500 ml CSF et qui ne fond pas à une température de 150 °C, et
   2 à 12 % en masse d'un liant,
   dans laquelle ladite composition adsorbante comprend en outre 2 à 66 % en masse d'une fibre résistante à la fusion ayant un faible degré de raffinage qui est composée d'une fibre ayant un degré de raffinage de 500 à 750 ml CSF et qui ne fond pas à une température de 150 °C.

2. Feuille d'adsorption selon la revendication 1,
   dans laquelle ladite fibre résistante à la fusion ayant un degré de raffinage élevé a une longueur de fibre moyenne de 0,5 à 2,5 mm, une largeur de fibre moyenne de 16 à 35 μm, et un rapport d'aspect de 30 à 80.

3. Feuille d'adsorption selon la revendication 1,
   dans laquelle ladite fibre résistante à la fusion ayant un faible degré de raffinage a une longueur de fibre moyenne de 2,6 à 10 mm, une largeur de fibre moyenne de 2 à 10 μm, et un rapport d'aspect de 300 à 1 250.

4. Feuille d'adsorption selon la revendication 1 ou 3,
   dans laquelle le degré de raffinage de fibres obtenues par combinaison de ladite fibre résistante à la fusion ayant un degré de raffinage élevé et de ladite fibre résistante à la fusion ayant un faible degré de raffinage est de 50 à 500 ml CSF.

5. Feuille d'adsorption selon la revendication 1,
   dans laquelle ladite composition adsorbante soit contient en outre, en une proportion de 25 % en masse ou moins, une fibre thermofusible composée d'une fibre qui fond à une température de 150 °C, soit ne contient pas ladite fibre thermofusible.

6. Feuille d'adsorption selon l'une quelconque des revendications 1 à 5, dans laquelle la feuille d'adsorption a un grammage de 40 à 150 g/m$^2$.

7. Procédé pour produire la feuille d'adsorption selon l'une quelconque des revendications 1 à 6,
   qui est un procédé pour produire une feuille d'adsorption par soumission d'une bouillie comprenant ladite composition adsorbante à une fabrication de papier au moyen d'un procédé de fabrication de papier par voie humide.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021050988 A
- JP HEI825257 B
- EP 1525802 A1